# EUROPEAN PATENT SPECIFICATION

(11) **EP 1 327 387 B1**
(45) Date of publication and mention of the grant of the patent: **12.09.2007**
(21) Application number: 03000730.6
(22) Date of filing: 13.01.2003
(51) Int. Cl.: A01K 97/10, F16M 11/14

(54) **Rest for fishing rod**
Angelrutenhalter
Support de canne à pêche

(30) Priority: 11.01.2002 IT MO20020007
(43) Date of publication of application: 16.07.2003
(73) Proprietor: Fishcon S.r.L., 41032 Cavezzo (Modena) (IT)
(72) Inventor: Gennari, Manrico, 41032 Cavezzo (IT)
(74) Representative: Crugnola, Pietro

(56) References cited:
- EP-A- 0 066 353
- EP-A- 0 914 767
- FR-A- 1 191 895
- GB-A- 2 313 030
- GB-A- 2 318 715
- GB-A- 2 360 686
- US-A- 2 442 736
- US-A- 4 070 011

## Description

The invention concerns a rest for fishing rods, namely a product equipped with a movable rod means that can be used to position at least one fishing rod near still and moving stretches of water and the apparatus that enables the position of said rod means to be altered.

GB2318715 describes an angling stand comprising an adjustable main shaft having bosses at either end thereof; two pivotally mounted arms secured to each boss. Each arm has an opening close to its free end which opening is arranged to receive a bank stick of a known type. A known type of snag bar can then be attached between the upper ends of adjacent bank sticks. EP0914767 describes support means, especially but not exclusively for supporting one or more fishing rods, comprising a main elongate part, at least one end of which is provided with pivot means. Two arms extend from the pivot means and are pivoted thereto so that they can be pivoted between a position in which they are substantially parallel to the main elongate part and a position in which they are splayed outwardly from one another away from the main elongate part. Those ends of the arms which are at the pivot means are coupled together in such a manner that movement of one of the arms is dependent on movement of the other, and movement of one of the arms towards the other arm and towards the axis of the main elongate part causes movement of the other arm towards that axis.

US2442736 describes an adjustable support, and more especially a portable adjustable hold-all stand, comprising a ring-like base, and provided with a slightly upwardly bowed bridge piece.

GB2313030 describes a fishing rod rest comprising a framework having a carrier structure adapted to carry a fishing rod or rods and a support structure adapted to support the carrier structure and to engage the ground, there being a connection between the carrier structure and the support structure which enables the carrier structure to be rotated through 360 degrees and also be tilted in a vertical direction in order to enable adjustments of the fishing rod or rods to be made both in azimuth and elevation.

Currently, the rests used in angling (the so-called 'rod supports') comprise a first support structure (or foot) resting on the ground connected to a second structure that is fixed to rod members on which the fishing rod rests during use. Said rod members are situated at two ends, front and back, of the product; at the rear end there are U-shaped support members, at the front end there are similar V-shaped members. Furthermore, for carp angling, the front rods may host indicators, i.e. instruments suitable for detecting any movement of the line that occurs when a fish bites, in the place of the V-shaped support members.

As said indicators are particularly costly and fragile instruments they are stored in suitable containing and protective bags together with the respective rods to better protect them from accidental blows that could occur during transit caused by the protruding configuration in which the rods lie in relation to the foot.

For this reason, the front rods provided with their respective indicators are fitted to the foot only shortly before an angling session and are removed at the end thereof.

Certain disadvantages stem therefrom: for example, much time is lost during the phase of assembling and disassembling the rods. Furthermore, as the rods bearing the indicators are - as explained above - stored separately from the foot, the rods and the respective indicators may be forgotten by the users at home or at the angling site or even be lost during journeys to and from the angling site, with considerable financial loss.

One aim of this invention is to improve the rests for fishing rods.

A second aim is to create a rest for fishing rods wherein the time taken to prepare for angling is considerably reduced.

Another aim is to create a rest for fishing rods wherein it is unnecessary to remove the indicators to protect the latter from accidental breakages during handling or transport.

According to the invention an apparatus is provided comprising a rod means suitable for receiving an indicator means of movement of the line, characterised in that said rod means is foldable so that it can take up an extended work position or alternatively a retracted rest position. This enables disassembly of the rods from the support foot, if current, to be avoided for handling or transport.

In one advantageous version the rod means can rotate by at least 180 °C around its own longitudinal axis.

As the rod means is foldable and can rotate around its own longitudinal axis, the line-movement indicator means can be kept inside a protected position inside the apparatus according to the invention when said apparatus is not in use. This enables the risk of damage to the line-movement indicator means in consequence of accidental blows to be limited and eliminates the need to store said indicating means separately.

It is therefore almost impossible to lose or forget the line-movement indicator means.

In order that the invention may be clearly and completely disclosed, reference will now be made, by way of examples that do not limit the scope of the invention, to the accompanying drawings, wherein:
Fig. 1 is a view of an articulated joint that connects to the support structure the rods receiving the indicators, enabling said rods to move between two assigned positions;
Fig. 2 is a view of a rest for fishing rods using the articulated joint in Fig. 1; said rest is shown in the use position;
Fig. 3 is a view of said rest with the foldable rods shown in the retracted rest position;
Fig. 4 is a detail of Fig. 3, showing an end of the rest with the foldable rods shown in the retracted rest position, and rotated around their own longitudinal axis;
Fig. 5 is a view of said rest during the transport phase, i.e. with the support foot closed and the movable rods in the retracted rest position.

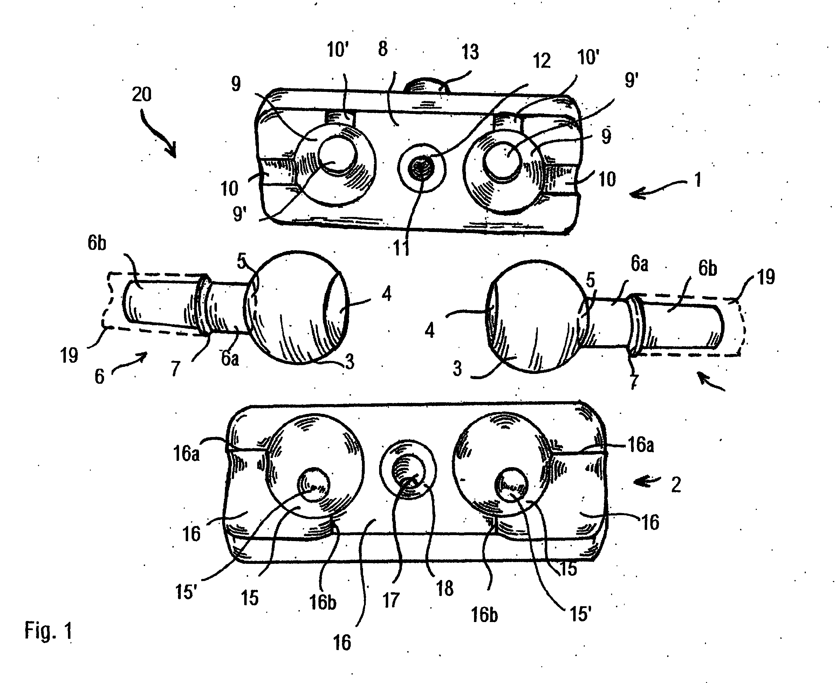

Fig. 1 shows an articulated joint 20 comprising a plate 1 and a further plate 2 that can be tightened by a blocking screw (not shown) around two spherical members 3. Each spherical member 3 has two flattened poles 4, 5; pole 5 is fixed to a connecting pin 6, comprising two portions 6a, 6b; of said portions, portion 6b is longer and slightly less in diameter than portion 6a. The border area between the two portions 6a and 6b comprises a ring-shaped elevation 7.

Said ring-shaped elevation 7, together with portion 6b, limits an area that is suitable for receiving the corresponding end of a foldable rod 19 (shown by broken line).

The plate 1 has a contact surface 8, comprising two hemispherical cavities 9 suitable for receiving the spherical members 3, and having a bottom interrupted by a through hole 9'. From each hemispherical side cavity 9 two grooves 10 go out that are arranged parallel to the longer side of the plate 1, and two further grooves 10' go out that are at right angles to said grooves 10.

Interposed between said cavities 9 there is a threaded through hole 11, surrounded by a spot-facing 12; the threaded through hole 11 extends inside a cylindrical member 13 that is fixed to the plate 1. Said cylindrical member 13 is received at one end of a C-shaped rod (not shown).

The further plate 2 has a further contact surface 14 comprising two further hemispherical cavities 15 that have a discharge recess 15' on the bottom.

Between the two further hemispherical cavities 15 there is a threaded through hole 17, surrounded by a further spot-facing 18; in an assembled configuration, the through hole 17 is coaxial with the threaded through hole 11. The further contact surface 14 furthermore comprises two milled parts 16 that notch the edge of said surface. Each of these milled parts 16 is bounded by two right-angled sections 16a, 16b.

In an assembled configuration, the spherical members 3 can rotate inside the hemispherical cavities 9 and the further hemispherical cavities 15; the foldable rods 19 are therefore movable, and are fixed to said spherical members 3 by means of the connecting pins 6.

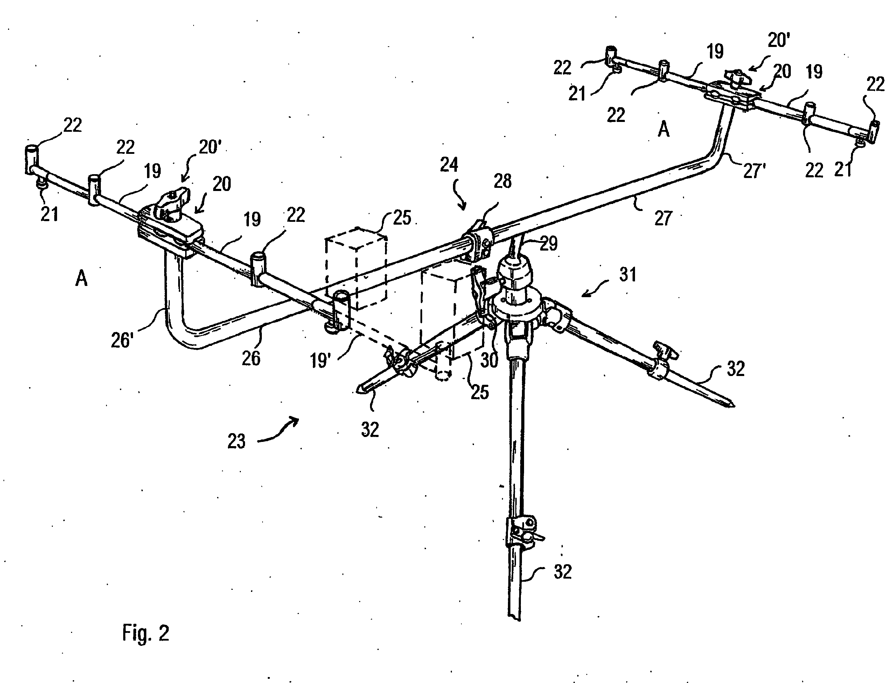

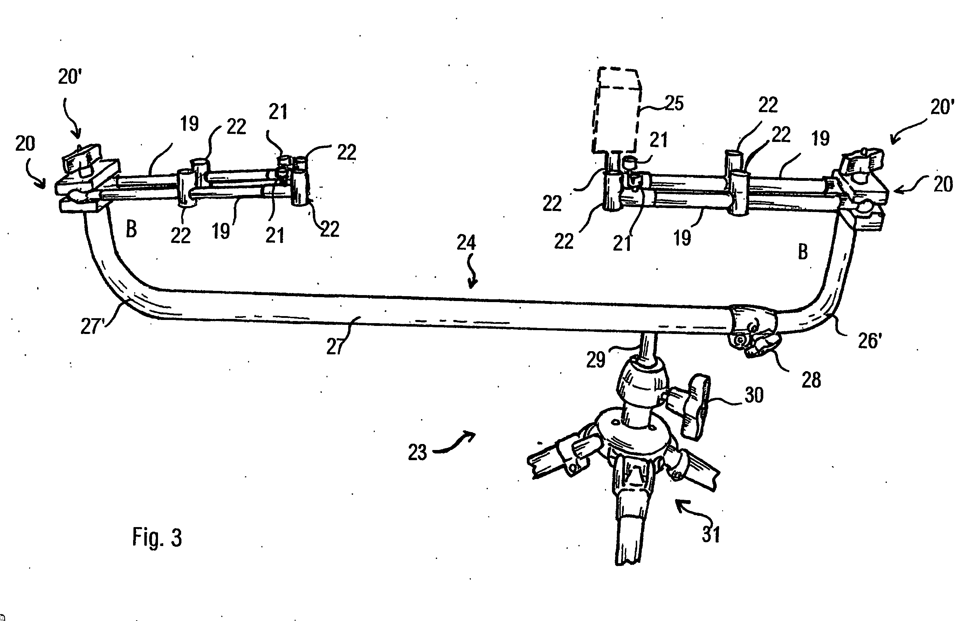

By loosening the blocking screw, the plate 1 and the further plate 2 move away from each other to allow the foldable rods 19 to move through 90° degrees; if said screw is tightened the plate 1 and the further plate 2 compress the spherical members 3, preventing them from moving in relation to the hemispherical cavities 9 and the further hemispherical cavities 15, and thereby immobilising the foldable rods 19, which can take up two alternative positions. In fact, if the foldable rods 19 are locked near the grooves 10 they take up an open work position A, shown in Fig. 2; if said rods are locked near the further grooves 10', they take up a retracted rest position B, shown in Fig. 3.

The articulated joints 20 described previously can be used in a rest 23 for fishing rods such as the one shown in Fig. 2.

In the rest 23, two articulated joints 20 provided with blocking screws that can be actuated by knobs 20' are connected to an extendible member 24, shaped in the form of a "C". The extendible member 24 comprises a segment 26 and a further segment 27, with a tubular geometry and different diameters so as to enable the segment 26 to slide into the further segment 27.

The position taken up reciprocally by the segment 26 and the further segment 27 can be adjusted by a locking device 28; in this way the length of the extendible member 24, and therefore of the rest 23, can be varied at will in relation to the length of the fishing rods with which the rest 23 is used.

The further segment 27 is fixed to a spherical articulated joint 29, the position of which can be adjusted by a screw that is actuated by a further knob 30. The spherical articulated joint 29 is furthermore connected to a support member 31 which, in the disclosed embodiment, is provided with a foldable tripod comprising feet provided with extendible ends 32; in an embodiment that is not shown, the support element can comprise a single rod that is suitable for being temporarily implanted in the ground.

The spherical articulated joint 29 enables the extendible member 24 to be oriented in any direction so as to ensure a suitable positioning for angling regardless of any unevenness in the ground.

The segment 26 and the further segment 27 have respectively one end folded into an elbow 26' and a further elbow end 27'; the elbow end 26' and the further elbow end 27' each receive an articulated joint 20 suitable for receiving a pair of foldable rods 19 (shown in the extended work position A). Each foldable rod 19 is provided internally with an extractable bar 19' (shown by a broken line), the axial position of which can be adjusted by an adjusting device 21. On the foldable rod 19, about half way along it, and on the free end of the extractable bar 19' cylindrical members 22 are positioned (each one being provided with a threaded dead hole not shown), suitable for alternatively receiving a line-movement indicator 25 (shown by a broken line) or a support for fishing rods (not shown).

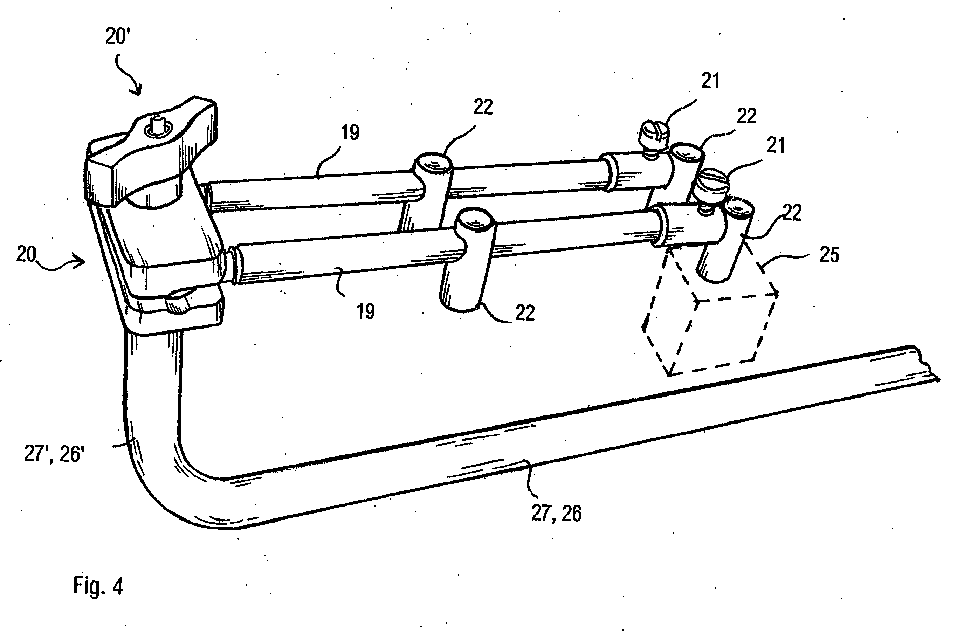

In the rest 23, shown in Fig. 2 in its use position, a first end can be identified that comprises a pair of foldable rods 19 suitable for receiving the line-movement indicators 25 (and therefore the part of the fishing rod oriented towards the still or moving stretch of water), and a second end comprising a pair of foldable rods 19 suitable for receiving prior-art supports arranged to receive the end of the fishing rod near the handle. As shown in Figs 3 and 4, the position of said rest 23 can be easily and advantageously modified for the purposes of transport.

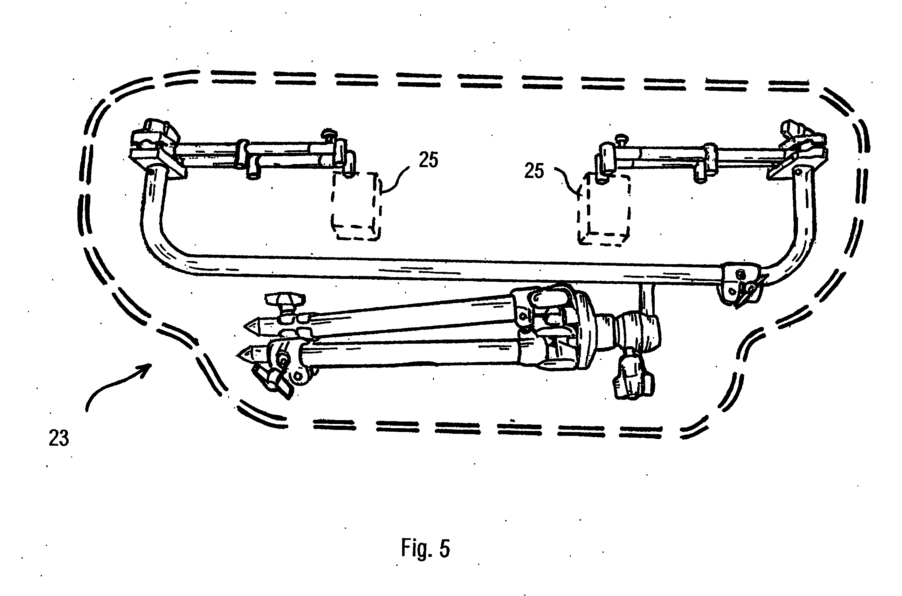

The length of the extendible member 24 can substantially be halved by adjusting the locking device 28; by loosening the plate 1 and the further plate 2 of the articulated joint 20 the foldable rods 19 can be brought to the retracted rest position B, wherein said rods are parallel to one another and to the extendible member 24. Owing to the many possibilities of rotating the spherical members 3 inside the articulated joint 20 it is also possible to rotate the foldable rods 19 by at least 180° around their longitudinal axis so as to easily orientate the line-movement indicators 25 towards the extendible member 24 (as shown in Fig. 4). As shown in Fig. 5, said operation means that the indicators 25 remain inside the overall dimensions (shown by a double broken line) of the rest 23 (shown with the tripod closed). This enables said indicators 25 to be kept protected from blows and therefore from accidental breakages that may occur during handling and transport of said rests. As a result it is possible to store rests and indicators in a single containing and protective encasing, thereby considerably reducing the risk of losing said indicators.

## Claims

1. Apparatus comprising rod means (19, 19') provided with support means (22) for receiving line-movement indicator means (25) and further support means (24, 31) for supporting said rod means (19, 19'), said rod means (19, 19') being foldable so as to be able to alternatively take up an extended work position (A) or a retracted rest position (B), **characterised in that** said rod means (19, 19') is rotatable by at least 180° around a longitudinal axis thereof so that said support means (22), in said retracted rest position (B), is oriented towards said further support means (24, 31).

2. Apparatus according to claim 1, wherein said rod means (19, 19') is movable thanks to articulated joint means (20).

3. Apparatus according to claim 2, wherein said articulated joint means (20) comprises plate means (1) and further plate means (2) that have reciprocal adjustable positions.

4. Apparatus according to claim 3, and further comprising adjusting screw means (20') that is suitable for adjusting said reciprocal adjustable positions.

5. Apparatus according to claim 3, or 4, wherein said plate means (1) and said further plate means (2) respectively comprise hemispheric cavity means (9) and further hemispheric cavity means (15).

6. Apparatus according to claim 5, and further comprising spherical means (3), suitable for being shapingly coupled with said hemispherical cavity means (9) and with said further hemispherical cavity means (15).

7. Apparatus according to claim 6, wherein said spherical means (3) is fixed to said rod means (19, 19') by connecting pin means (6).

8. Apparatus according to claim 6, or 7, wherein said spherical means (3) moves in relation to said hemispherical cavity means (9) and to said further hemispherical cavity means (15) to enable said rod means (19, 19') to move.

9. Apparatus according to any preceding claim, wherein, in said extended work position (A), said rod means (19, 19') is substantially coaxial.

10. Apparatus according to any preceding claim, wherein, in said retracted rest position (B), said rod means (19, 19') is substantially parallel.

11. Apparatus according to any preceding claim, wherein said further support means (24, 31) comprises C-shaped extendible-member means (24).

12. Apparatus according to claim 11, wherein said extendible-member means (24) comprises segment means (26) that slides in relation to further segment means (27).

13. Apparatus according to any preceding claim, wherein said further support means (24, 31) comprises spherical articulated joint means (29) suitable for enabling the orientation of said extendible-member means (24).

14. Apparatus according to any preceding claim, wherein said further support means (24, 31) is foldable.

15. Apparatus according to any preceding claim, wherein said further support means (24, 31) comprises a tripod (31) provided with extendible feet (32).

## Patentansprüche

1. Vorrichtung mit einem Stangenmittel (19, 19'), das mit einem Aufnahmemittel (22) zur Aufnahme eines Linienbewegungsanzeigemittels (25) ausgebildet ist, ferner mit einem Aufnahmemittel (24, 31) zur Aufnahme des Stangenmittels (19, 19'), wobei das Stangenmittel (19, 19') faltbar ist, um alternativ eine ausgezogene Arbeitsposition (A) oder eine eingezogene Ruheposition (B) einzunehmen, **dadurch gekennzeichnet, dass** das Stangenmittel (19, 19') wenigstens um 180° um eine Längsachse davon drehbar ist, so dass das Aufnahmemittel (22) in der eingezogenen Ruheposition (B) zu dem weiteren Aufnahmemittel (24, 31) hin orientiert ist.

2. Vorrichtung nach Anspruch 1, bei der das Stangenmittel (19, 19') infolge eines Gelenkverbindungsmittels (20) bewegbar ist.

3. Vorrichtung nach Anspruch 2, bei der das Gelenkverbindungsmittel (20) ein Plattenmittel (1) und ein weiteres Plattenmittel (2) aufweist, die reziprok einstellbare Positionen haben.

4. Vorrichtung nach Anspruch 3, ferner aufweisend ein Einstellschraubenmittel (20'), das zur Einstellung der reziprok einstellbaren Positionen geeignet ist.

5. Vorrichtung nach Anspruch 3 oder 4, bei der das Plattenmittel (1) und das weitere Plattenmittel (2) jeweils ein halbkugelförmiges Hohlraummittel (9) und ein weiteres halbkugelförmiges Hohlraummittel (15) aufweist.

6. Vorrichtung nach Anspruch 5, die ferner ein Kugelmittel (3) aufweist, das dazu geeignet ist, formmäßig mit dem halbkugelförmigen Hohlraummittel (9) und mit dem weiteren halbkugelförmigen Hohlraummittel (15) gekoppelt zu werden.

7. Vorrichtung nach Anspruch 6, bei der das Kugelmittel (3) an dem Stangenmittel (19, 19') durch ein Verbindungsstiftmittel (6) gekoppelt ist.

8. Vorrichtung nach Anspruch 6 oder 7, bei der sich das Kugelmittel (3) in Bezug auf das halbkugelförmige Hohlraummittel (9) und das weitere halbkugelförmige Hohlraummittel (15) bewegt, um zu ermöglichen, dass sich das Stangenmittel (19, 19') bewegt.

9. Vorrichtung nach irgendeinem vorhergehenden Anspruch, bei der das Stangenmittel (19, 19') in der ausgedehnten Arbeitsposition (A) im Wesentlichen koaxial ist.

10. Vorrichtung nach irgendeinem vorhergehenden Anspruch, bei der das Stangenmittel (19, 19') in der eingezogenen Ruheposition (B) im Wesentlichen parallel ist.

11. Vorrichtung nach irgendeinem vorhergehenden Anspruch, bei der das weitere Aufnahmemittel (24, 31) ein C-förmiges ausziehbares Elementmittel (24) aufweist.

12. Vorrichtung nach Anspruch 11, bei der das ausziehbare Elementmittel (24) ein Segmentmittel (26) aufweist, das in Bezug auf ein weiteres Segmentmittel (27) verschiebbar ist.

13. Vorrichtung nach irgendeinem vorhergehenden Anspruch, bei der das weitere Aufnahmemittel (24, 31) ein kugelförmiges Gelenkverbindungsmittel (29) aufweist, um die Orientierung des ausziehbaren Elementmittels (24) zu ermöglichen.

14. Vorrichtung nach irgendeinem vorhergehenden Anspruch, bei der das weitere Aufnahmemittel (24, 31) faltbar ist.

15. Vorrichtung nach irgendeinem vorhergehenden Anspruch, bei der das weitere Aufnahmemittel (24, 31) ein Dreifuß (31) mit ausziehbaren Füßen (32) ist.

## Revendications

1. Dispositif comprenant des moyens de tringle (19, 19') munis de moyens de support (22) destinés à recevoir des moyens (25) indicateurs des mouvements d'une ligne et des moyens de support supplémentaires (24, 31) destinés à supporter lesdits moyens de tringle (19, 19'), lesdits moyens de tringle (19, 19') étant repliables de manière à pouvoir alternativement adopter une position de travail déployée (A) ou une position de repos escamotée (B), ***caractérisé en ce que*** lesdits moyens de tringle (19, 19') peuvent pivoter sur au moins 180° autour d'un axe longitudinal de telle sorte que lesdits moyens de support (22), dans ladite position de repos escamotée (B), soient orientés vers lesdits moyens de support supplémentaires (24, 31).

2. Dispositif selon la revendication 1, dans lequel lesdits moyens de tringle (19, 19') sont mobiles grâce à des moyens de joints articulés (20).

3. Dispositif selon la revendication 2, dans lequel lesdits moyens de joints articulés (20) comprennent des moyens de plaque (1) et des moyens de plaque supplémentaires (2) qui ont des positions mutuellement réglables.

4. Dispositif selon la revendication 3, et comprenant de plus des moyens de vis de réglage (20') qui sont aptes à régler lesdites positions mutuellement réglables.

5. Dispositif selon la revendication 3 ou 4, dans lequel lesdits moyens de plaque (1) et lesdits moyens de plaque supplémentaires (2) comprennent respectivement des moyens de cavité hémisphérique (9) et des moyens de cavité hémisphérique supplémentaires (15).

6. Dispositif selon la revendication 5, et comprenant de plus des moyens sphériques (3), aptes à être couplés par leur forme avec lesdits moyens de cavité hémisphérique (9) et avec lesdits moyens de cavité hémisphérique supplémentaires (15).

7. Dispositif selon la revendication 6, dans lequel lesdits moyens sphériques (3) sont fixés auxdits moyens de tringle (19, 19') par des moyens de broche de liaison (6).

8. Dispositif selon la revendication 6 ou 7, dans lequel lesdits moyens sphériques (3) se déplacent en relation avec lesdits moyens de cavité hémisphérique (9) et avec lesdits moyens de cavité hémisphérique supplémentaires (15) pour permettre auxdits moyens de tringle (19, 19') de se déplacer.

9. Dispositif selon l'une quelconque des revendications précédentes, dans lequel, dans ladite position de travail déployée (A), lesdits moyens de tringle (19, 19') sont sensiblement coaxiaux.

10. Dispositif selon l'une quelconque des revendications précédentes, dans lequel, dans ladite position de repos escamotée (B), lesdits moyens de tringle (19, 19') sont sensiblement parallèles.

11. Dispositif selon l'une quelconque des revendications précédentes, dans lequel lesdits moyens de support supplémentaires (24, 31) comprennent des moyens d'élément extensible en forme de C (24).

12. Dispositif selon la revendication 11, dans lequel lesdits moyens d'élément extensible (24) comprennent des moyens de segment (26) qui coulissent en relation avec des moyens de segment supplémentaires (27).

13. Dispositif selon l'une quelconque des revendications précédentes, dans lequel lesdits moyens de support supplémentaires (24, 31) comprennent des moyens de joint articulé sphérique (29) aptes à permettre l'orientation desdits moyens d'élément extensible (24).

14. Dispositif selon l'une quelconque des revendications précédentes, dans lequel lesdits moyens de support supplémentaires (24, 31) sont repliables.

15. Dispositif selon l'une quelconque des revendications précédentes, dans lequel lesdits moyens de support supplémentaires (24, 31) comprennent un tripode (31) muni de pieds extensibles (32).
